# EUROPEAN PATENT APPLICATION

(11) **EP 4 394 344 A1**
(43) Date of publication of application: **03.07.2024**
(21) Application number: 23020266.5
(22) Date of filing: 29.05.2023
(51) Int. Cl.: G01M 1/02

(54) **A DYNAMIC BALANCING MACHINE**

(30) Priority: 27.12.2022 PL 44327122
(71) Applicant: Przedsiebiorstwo "Cimat" Sp. z o.o., 85-862 Bydgoszcz (PL)
(72) Inventor: Sadowski, Pawel, 85-862 Bydgoszez (PL); Henclik, Szymon, 85-862 Bydgoszez (PL)
(74) Representative: Godlewski, Piotr

(57) **Abstract**

The dynamic balancing machine comprises a body (1) with a cover (2) placed thereon, and with a drive, a measuring and computational module with a measurement system and a computational module, an electrical system, a rotor mounting, a milling unit (41), a machining tool (42), and a mass correction station (3) comprising a casing (13) with a horizontal displacement unit (14) mounted therein, mounted parallel to the upper surface of the body (1), and a vertical displacement unit (15) mounted perpendicularly to the horizontal displacement unit (14), connected to an electrical cabinet with a control panel. In the construction of the measurement system, perpendicularly to its base, from the side of the lateral edge of the body (1), a silencing chamber (5) is mounted, three side walls of which constitute a steel bracket (6), while the fourth wall of this silencing chamber (5), directed towards the edge of the body (1), is a rectangular cuboidal plate (7). A polymer concrete inset (8) is placed between the bracket (6) and the plate (7). The casing (13) of the mass correction station (3) has at least one of its walls in the form of at least one composite panel (44).

## Description

The object of the invention is a highly efficient dynamic balancing machine.

From the patent description PL225215B1 there is a known balancing machine of articulated shafts for dynamic balancing thereof, which comprises at least two support stands placed on the bed of the machine, each support stand having an upper part supported by springs, on which a spindle is rotatably arranged around an axis with a fastening for one end, intended for balancing an articulated shaft, and a first vibration sensor, which detects the vibrations of the upper part caused by unbalance of the articulated shaft and further forces involved in at least one first degree of freedom of movement, perpendicular to the spindle axis. A second vibration sensor is mounted on the upper part of at least one support stand, which detects the vibration of the upper part in at least one degree of freedom of movement. The vibration signals from the first and second vibration sensors are fed into an analysing system, which analyses and correlates the vibration signals with each other, so that the unbalance value of the articulated shaft calculated during the analysis does not include the oscillation excitations of tilting the upper part.

From the application description of the invention JP2021060254A there is a known machine, in which the unbalance time is shortened, and the unbalance is corrected. The control unit of this known balancing machine measures the first unbalance of a reference test target, caused by rotation of a rotary spindle in a state in which the mounting position of the reference test target and the characteristic unbalance of the drive unit are changed. The control unit acquires the magnitude of correction for the unbalance based on the first unbalance and the second unbalance. The control unit acquires the function of acquiring the magnitude of correction from the mass of the test target. The control unit corrects the unbalance of a new test target based on the magnitude of correction acquired by replacing the mass of the target test in the function.

The purpose of the invention is to develop a new dynamic balancing machine, whose use will shorten the balancing time, which will translate into an increase in the number of balanced items.

The dynamic balancing machine comprising a body with a cover placed thereon, and with a drive, a measuring and computational module with a measurement system and a computational module, an electrical system, a rotor mounting, a milling unit, a machining tool, and a mass correction station comprising a casing with a horizontal displacement unit mounted therein, mounted parallel to the upper surface of the body, and a vertical displacement unit mounted perpendicularly to the horizontal displacement unit, connected to an electrical cabinet with a control panel, according to the invention is characterised in that in the construction of the measurement system, perpendicularly to its base, from the side of the lateral edge of the body, a silencing chamber is mounted, three side walls of which constitute a steel bracket, while the fourth wall of this silencing chamber, directed towards the edge of the body, is a rectangular cuboidal plate, while between this bracket and the plate there is a polymer concrete inset, and moreover, the casing of the mass correction station has at least one of its walls in the form of at least one composite panel.

Preferably, the composite panel of the casing of the mass correction station consists of at least two steel structures, between which, connected to them by glueing, there is a layer of an epoxy-glass laminate, the number of the composite panels being two, and them being slideable apart from each other.

The new balancing machine according to the invention has a fast work cycle, and it is therefore possible to perform a larger number of balancings compared to the use of known balancing machines. The performance of measurements and calculations is more efficient and faster. The use of a polymer concrete chamber contributes to shortening the duration of eliminating the own vibrations of the measurement system, which enables earlier activation of the measurement of the next detail, and achieving a shorter unbalance measurement duration. In the casing of the mass correction station, replacing one of the walls made of uniform steel plates with a wall in the form of a composite panel, in particular made of construction elements made of steel sheets and panels made of an epoxy-glass laminate glued together, allows for lowering the body mass of the mass correction station, at the same time retaining the operational parameters.

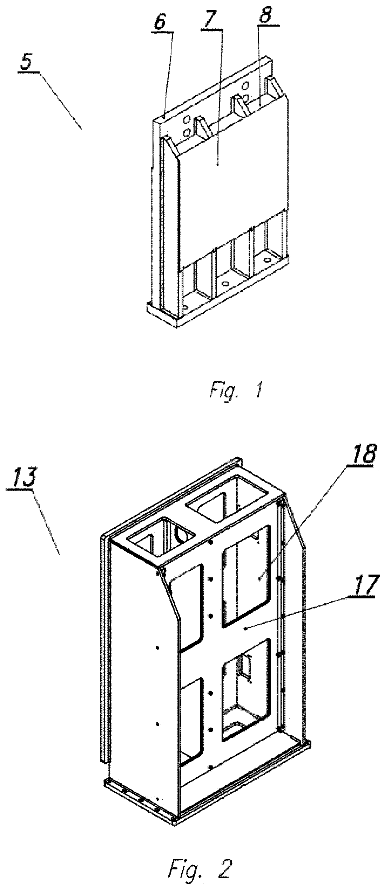

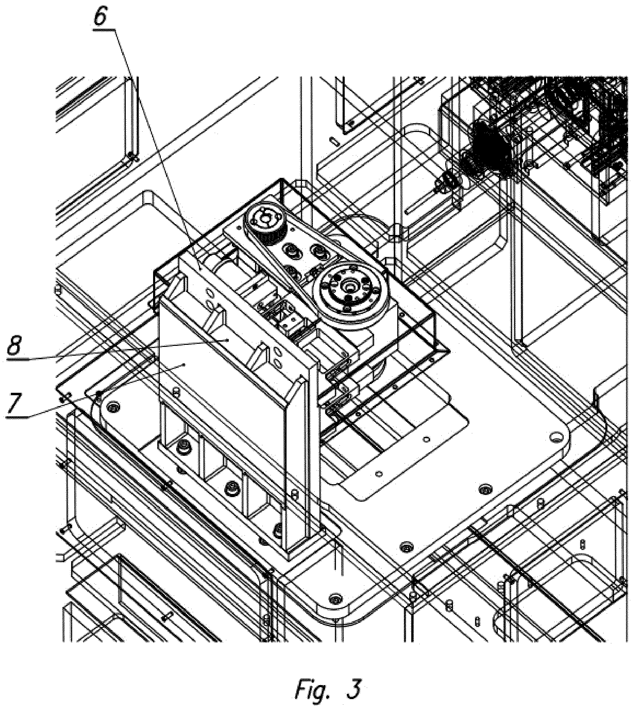

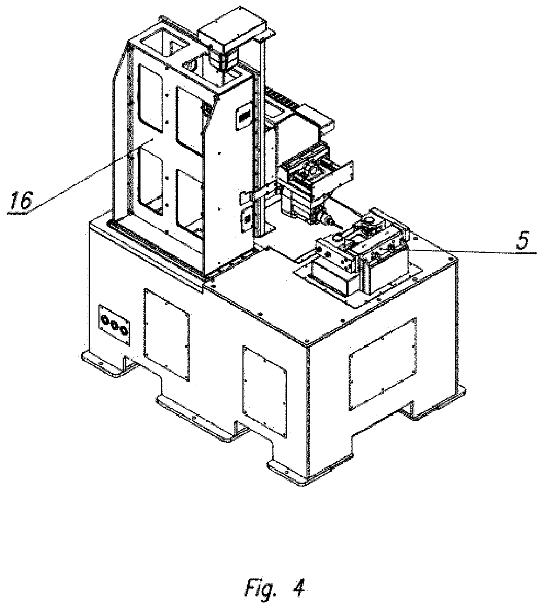

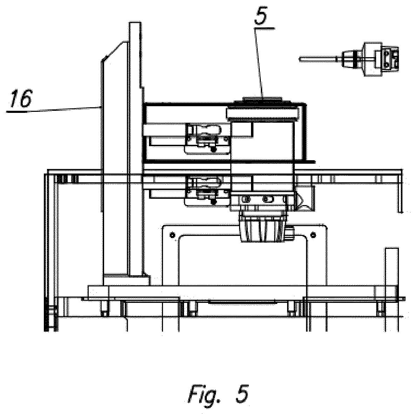

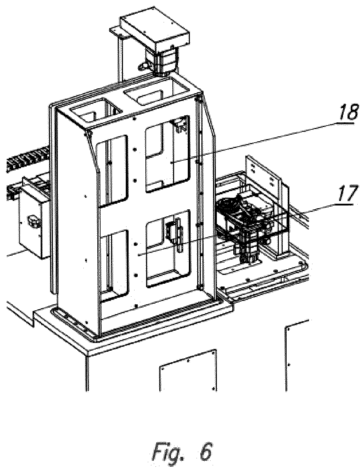

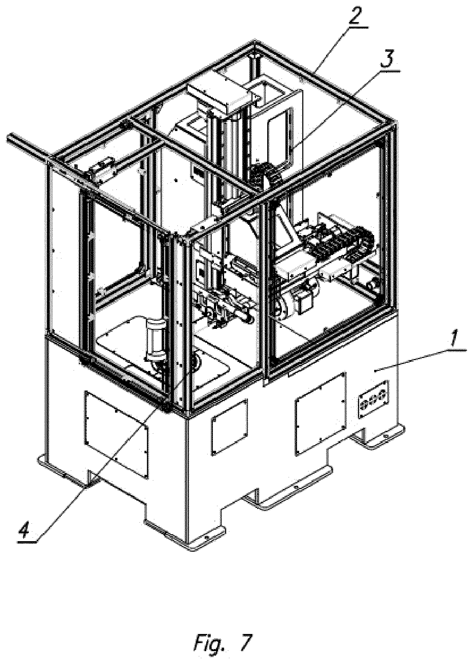

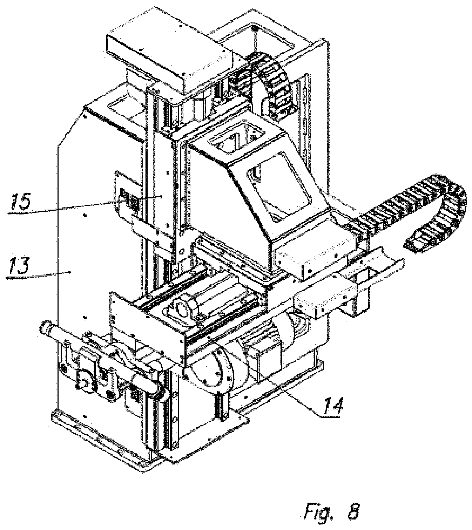

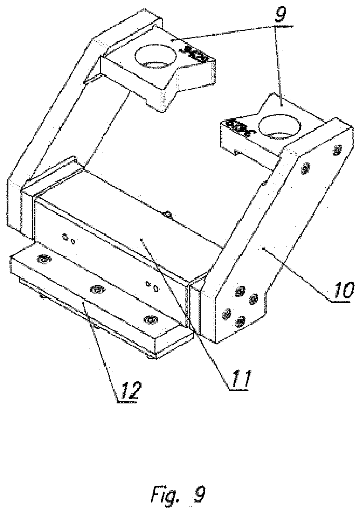

The object of the invention is presented in the drawing, in which fig. 1 presents the silencing chamber in a front, top, and side view, fig. 2-the casing of the mass correction station in a front and side view, fig. 3-the silencing chamber mounted in the construction of the measurement system in a front view, fig. 4-the balancing machine in a rear and right side view, fig. 5-the same balancing machine in a right side view, fig. 6-the casing of the mass correction station in a front view, fig. 7-the dynamic balancing machine in a front, top, and left side view, fig. 8-the mass correction station in a front, top, and right side view, while fig. 9-a vice.

In a first embodiment, the dynamic balancing machine according to the invention comprises a body 1 with a rectangular cuboidal cover 2 placed thereon. A drive is placed inside the body 1, with a technological holder placed on the surface of the body 1. The drive is connected to an electrical system, a pneumatic system, and a mass correction station 3, which is connected to a measuring and computational module. Jaws 4 of the rotor mounting system are also placed on the surface of the body 1. The body 1 is made of metal sheets connected to each other by means of welding. In a recess of the body 1, closed by lids, there is a measuring and computational module with a measurement system, in whose construction, perpendicularly to the base, from the side of the lateral edge of the body 1, a silencing chamber 5 is mounted, whose three side walls constitute a bracket 6, while its fourth side wall, from the side of the lateral edge of the body 1, constitutes a rectangular cuboidal plate 7. A polymer concrete inset 8 is placed between the bracket 6 and the plate 7. The body 1 is level and fixed to the ground. On the top surface of the body 1, close to one of its edges, there is a rail, in which one of the walls of the cover 2 is slidably placed. The remaining walls of the cover 2 are connected to the body 1. The walls of the cover 2 are made of aluminium profiles and polycarbonate panels. It prevents access to the balancing area when the drive motor of the rotor is operating, and prevents deactivating the machine with the cover 2 open or unlocked. The use of the cover 2 also causes the reduction of noise during balancing, and prevents the accumulation of contaminants on the balancing machine. The measuring and computational module comprises a measurement system and a computational module, a vibration sensor, which enables performing the measurement of unbalance, a rotation sensor, and a spindle, to which the detail being balanced is mounted, which is preferably placed in an adapter. The rotor also constitutes the drive of the spindle, and it is responsible for arranging the detail being balanced in the starting position for mass correction. The spindle is driven by a servomotor by means of a belt drive, and moreover the spindle has a bearing, which ensures the required precision and stability. The spindle motor control system allows for unrestricted programming of rotations within the available range. On the other hand, an encoder allows for tracing the unbalance position during manual rotation of the rotor after measuring the unbalance. The rotor is connected to an inductive sensor, which enables measuring the speed of the rotor being balanced. The detail is mounted on the spindle by means of replaceable technological instrumentation, and it is placed in a vice, which comprises clamping jaws 9, which hold the detail during balancing correction. They are controlled by a pneumatic system being an HMI control panel, which is connected to a computer by means of a bidirectional bus. Each of the two clamping jaws 9 is connected via a support 10 to a pneumatic holder 11, which is mounted to a mounting base 12. The computational module of the measuring and computational module is placed in an electrical cabinet, which is near the dynamic balancing machine, while communication between them proceeds by means of a touch-screen and a control panel, mounted on this electrical cabinet, which are connected to the sensors and drives of the balancing machine. The measurement system is in turn mounted on the surface of the body 1. The result of balancing obtained during the measurement is expressed as an angle, and the value of mass necessary to be added to or removed from the detail. The correction of mass is performed after performing the unbalance measurement by the measurement system. The mass correction station 3 is placed on the body 1, and it is connected to the electrical cabinet, in which there is an HMI control panel for controlling this mass correction station 3. It also comprises a casing 13, with a horizontal displacement unit 14 and a vertical displacement unit 15 mounted therein. The housing 13 of the mass correction station 3 has one of its walls in the form of two composite panels 16 which are slideable apart, each of which consists of two steel structures 17 with rectangular outlines, and a layer of an epoxy-glass laminate 18 glued on therebetween.

Before commencing balancing, the machine needs to be properly prepared, and the measurement system calibrated. In order to perform calibration, all the proper technological instrumentation for the balanced rotor type is mounted, the technological holder is properly mounted, and the rotor being balanced is mounted.

During the performance of the balancing process, the electrical power of the dynamic balancing machine is turned on, and subsequently a compressed air supply is turned on. The control panel and the computer are turned on in sequence. The manual operating mode of the dynamic balancing machine is selected, and the cover 2 is opened. Subsequently, the detail being balanced is placed in the clamping jaws 9, and they are mounted by means of the mounting base 12 on the first mounting plate of the horizontal displacement unit 14. The rotor is placed on the holder of the spindle, and the spindle is closed. The correctness of this seating is checked, and the measuring and computational module is activated, choosing a proper testing mode for this detail. Subsequently, automatic operation mode is set in the control panel, and the balancing process is started, the cover 2 being locked. The rotor is clamped in the holder of the spindle. Subsequently, the drive motor of the rotor is turned off, and the measurement of unbalance is started, upon the completion of which the rotor is positioned correspondingly to the correction of mass. Subsequently, the cover 2 is opened, and the detail is mounted by means of the mounting base 12 on the second mounting plate of the vertical displacement unit 15. The cover 2 is closed, and the balancing as well as the measurement of unbalance are repeated. Once the measurement is completed, the rotor stops automatically. If the unbalance of the details falls within the assumed scope, the clamping jaws 9 are opened, the cover 2 is opened, and the rotor is disassembled.

The dynamic balancing machine according to the invention in a second embodiment is like in the first embodiment, except the walls of the cover 2 are made of aluminium profiles and polycarbonate panels, while the casing 13 of the mass correction station 3 has one of its walls in the form of a composite panel 16 consisting of two steel structures 17 with rectangular outlines, and a layer of an epoxy-glass laminate 18 glued on therebetween.

The dynamic balancing machine according to the invention in a third embodiment is like in the first embodiment, except all the walls of the casing 13 of the mass correction station 3 have the form of composite panels 16.

## Claims

1. A dynamic balancing machine comprising a body with a cover placed thereon, and with a drive, a measuring and computational module with a measurement system and a computational module, an electrical system, a rotor mounting, a milling unit, a machining tool, and a mass correction station comprising a casing with a horizontal displacement unit mounted therein, mounted parallel to the upper surface of the body, and a vertical displacement unit mounted perpendicularly to the horizontal displacement unit, connected to an electrical cabinet with a control panel, **characterised in that** in the construction of the measurement system, perpendicularly to its base, from the side of the lateral edge of the body (1), a silencing chamber (5) is mounted, three side walls of which constitute a steel bracket (6), while the fourth wall of this silencing chamber (5), directed towards the edge of the body (1), is a rectangular cuboidal plate (7), while between this bracket (6) and the plate (7), there is a polymer concrete inset (8), and moreover, the casing (13) of the mass correction station (3) has at least one of its walls in the form of at least one composite panel (44).

2. The balancing machine according to claim 1, **characterised in that** the composite panel (44) of the casing (13) of the mass correction station (3) consists of at least two steel structures (45), between which there is, connected thereto by glueing, a layer of an epoxy-glass laminate (46).

3. The balancing machine according to claim 2, **characterised in that** the number of the composite panels (44) is two, and they are slideable apart from each other.
